# EUROPEAN PATENT APPLICATION

(11) **EP 4 542 708 A1**
(43) Date of publication of application: **23.04.2025**
(21) Application number: 23824011.3
(22) Date of filing: 16.06.2023
(51) Int. Cl.: H01M 10/0562, H01M 10/052

(54) **SECONDARY BATTERY**

(30) Priority: 17.06.2022 JP 2022098323
(71) Applicant: TOYOTA JIDOSHA KABUSHIKI KAISHA, Toyota-shi Aichi 471-8571 (JP); DAIKIN INDUSTRIES, LTD., Osaka-shi, Osaka 530-0001 (JP)
(72) Inventor: NOMOTO, Kazushige, Toyota-shi, Aichi 471-8571 (JP); NISHIMURA, Hideaki, Toyota-shi, Aichi 471-8571 (JP); MIZUNO, Fuminori, Toyota-shi, Aichi 471-8571 (JP); HIRAGA, Kentaro, Osaka-shi, Osaka 530-0001 (JP); YAMADA, Takaya, Osaka-shi, Osaka 530-0001 (JP); SUGIYAMA, Akinari, Osaka-shi, Osaka 530-0001 (JP)
(74) Representative: J A Kemp LLP
(86) International application number: PCT/JP2023/022442
(87) International publication number: WO 2023/243721

(57) **Abstract**

In a secondary battery including an electrolyte layer containing a sulfide solid electrolyte, the electrolyte layer has both high voltage resistance and high ionic conductivity. The secondary battery of the present disclosure includes a positive electrode, an electrolyte layer, and a negative electrode, wherein the electrolyte layer contains a sulfide solid electrolyte and a perfluoropolyether represented by formula (1) below:

E₁-Rf₁-R^{F}-O-Rf₂-E₂ (1)

where Rf₁ and Rf₂ are each independently a C₁₋₁₆ divalent alkylene group which may be substituted with one or more fluorine atoms, E₁ and E₂ are each independently a monovalent group selected from the group consisting of a fluorine group, a hydrogen group, a hydroxyl group, an aldehyde group, a carboxylic acid group, a C₁₋₁₀ alkyl ester group, an amide group which may have one or more substituents, and an amino group which may have one or more substituents, and R^{F} is a divalent fluoropolyether group.

## Description

### FIELD

The present invention relates to a secondary battery

### BACKGROUND

Patent Literature 1 discloses a secondary battery comprising an electrolyte layer, wherein the electrolyte layer contains a solid electrolyte material and an insulating material. Patent Literature 2 discloses a perfluoropolyether as an additive component of a non-aqueous electrolytic solution. Patent Literature 3 discloses a perfluoropolyether as an ion-conducting polymer.

### [CITATION LIST]

### [PATENT LITERATURE]

[PTL 1] Japanese Unexamined Patent Publication No. 2012-094437
[PTL 2] Japanese Unexamined Patent Publication No. 2018-200866
[PTL 3] Japanese Unexamined Patent Publication No. 2019-524977

### SUMMARY

### [TECHNICAL PROBLEM]

It is necessary that the electrolyte layer of a secondary battery have high insulation properties (voltage resistance). However, if an insulating material is added to the electrolyte layer in order to increase the voltage resistance of the electrolyte layer, the ionic conductivity of the electrolyte layer may decrease, whereby the resistance of the battery may increase. According to the new findings of the present inventors, such a problem is likely to occur when the electrolyte layer contains a sulfide solid electrolyte. Specifically, there is room for improvement in the electrolyte layer containing a sulfide solid electrolyte in terms of achieving both voltage resistance and ionic conductivity.

### [SOLUTION TO PROBLEM]

As means for solving the problem described above, the present disclosure provides the following plurality of aspects.

### <Aspect 1>

A secondary battery, comprising a positive electrode, an electrolyte layer, and a negative electrode, wherein
the electrolyte layer contains a sulfide solid electrolyte and a perfluoropolyether represented by formula (1) below:

   E₁-Rf₁-R^{F}-O-Rf₂-E₂ (1)
where Rf₁ and Rf₂ are each independently a C₁₋₁₆ divalent alkylene group which may be substituted with one or more fluorine atoms,
E₁ and E₂ are each independently a monovalent group selected from the group consisting of a fluorine group, a hydrogen group, a hydroxyl group, an aldehyde group, a carboxylic acid group, a C₁₋₁₀ alkyl ester group, an amide group which may have one or more substituents, and an amino group which may have one or more substituents, and
R^{F} is a divalent fluoropolyether group.

### <Aspect 2>

The secondary battery according to Aspect 1, wherein
R^{F} is a group represented by formula (2):

   -(OC₆F₁₂)ₐ-(OC₅F₁₀)b-(OC₄F₈)_{c}-(OC₃R^{Fa}₆)d-(OC₂F₄)ₑ-(OCF₂)f- (2)
where each R^{Fa} is independently a hydrogen atom, a fluorine atom, or a chlorine atom,
a, b, c, d, e, and f are each independently an integer of 0 to 200,
the sum of a, b, c, d, e, and f is 1 or more,
the order of occurrence of each repeating unit enclosed in parentheses with the subscript a, b, c, d, e, or f is arbitrary in the formula, and
under the proviso that when all R^{Fa} are hydrogen atoms or chlorine atoms, at least one of a, b, c, e, and f is 1 or more.

### <Aspect 3>

The secondary battery according to Aspect 2, wherein
each R^{Fa} is a fluorine atom.

### <Aspect 4>

The secondary battery according to Aspect 3, wherein
each R^{F} is independently a group represented by formula (2-1), (2-2), (2-3), (2-4), or (2-5) below:

   -(OC₃F₆)d-(OC₂F₄)ₑ- (2-1)
where d is an integer of 1 to 200, and e is 0 or 1;

   -(OC₄F₈)_{c}-(OC₃F₆)d-(OC₂F₄)ₑ-(OCF₂)_{f}- (2-2)
where c and d are each independently an integer of 0 to 30,
e and f are each independently an integer of 1 to 200,
the sum of c, d, e, and f is an integer of 10 to 200, and
the order of occurrence of each repeating unit enclosed in parentheses with the subscript c, d, e or f is arbitrary in the formula;

   -(R₆-R₇)_{g}- (2-3)
where R₆ is OCF₂ or OC₂F₄,
R₇ is a group selected from OC₂F₄, OC₃F₆, OC₄F₈, OC₅F₁₀, and OC₆F₁₂, or a combination of two or three groups selected from these groups, and
g is an integer of 2 to 100;

   -(OC₆F₁₂)ₐ-(OC₅F₁₀)b-(OC₄F₈)_{c}-(OC₃F₆)d-(OC₂F₄)ₑ-(OCF₂)_{f}- (2-4)
where e is an integer of 1 or more and 200 or less,
a, b, c, d, and f are each independently an integer of 0 or more and 200 or less, and
the order of occurrence of each repeating unit enclosed in parentheses with the subscript a, b, c, d, e, or f is arbitrary in the formula; and

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (2-5)
where f is an integer of 1 or more and 200 or less,
a, b, c, d, and e are each independently an integer of 0 or more and 200 or less, and
the order of occurrence of each repeating unit enclosed in parentheses with the subscript a, b, c, d, e, or f is arbitrary in the formula.

### <Aspect 5>

The secondary battery according to Aspect 4, wherein
each R^{F} is a group represented by formula (2-6) below:

   -(OCF₂CF₂CF₂)ₐ-(OCF(CF₃)CF₂)_{b}-(OCF₂CF(CF₃))_{c}-(OCF₂CF₂)_{d}-(OCF(CF₃))ₑ-(OCF₂)_{f}- (2-6)
where a, b, c, d, e, and f are each independently an integer of 0 to 200,
the sum of a, b, c, d, e, and f is 1 or more, and
the order of occurrence of each repeating unit enclosed in parentheses with the subscript a, b, c, d, e, or f is arbitrary in the formula.

### <Aspect 6>

The secondary battery according to Aspect 4, wherein
each R^{F} is a group represented by formula (2-7) below:

   -(OCF₂CF₂)_{d}-(OCF(CF₃))ₑ-(OCF₂)_{f}- (2-7)
where d, e, and f are each independently an integer of 0 to 200,
the sum of d, e, and f is 1 or more, and
the order of occurrence of each repeating unit enclosed in parentheses with the subscript d, e, or f is arbitrary in the formula.

### <Aspect 7>

The secondary battery according to any one of Aspects 1 to 6, wherein
E₁-Rf₁ and E₂-Rf₂ are each independently a group selected from the group consisting of - CF₃, -CF₂CF₃, and -CF₂CF₂CF₃.

### <Aspect 8>

The secondary battery according to any one of Aspects 1 to 7, wherein
the electrolyte layer contains 1 vol% or more and 25 vol% or less of the perfluoropolyether.

### [ADVANTAGEOUS EFFECTS OF INVENTION]

The electrolyte layer of the present disclosure is likely to have both high voltage resistance and high ionic conductivity, and a secondary battery including such an electrolyte layer is likely to have low resistance, for example.

### BRIEF DESCRIPTION OF DRAWINGS

FIG. 1 schematically shows an example of a secondary battery configuration.
FIG. 2 schematically shows an example of evaluation results of voltage resistance of an electrolyte layer.

### DESCRIPTION OF EMBODIMENTS

### 1. Secondary Battery

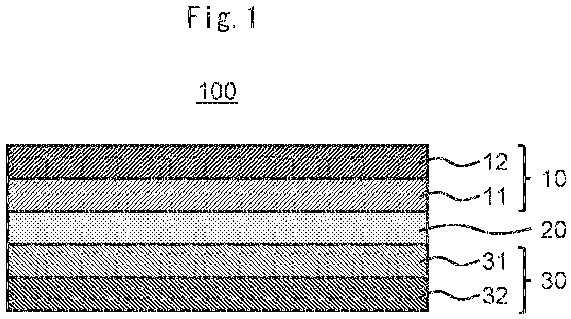

Embodiments of the technology of the present disclosure will be described below, but the technology of the present disclosure is not limited to the following embodiments. As shown in FIG. 1, a secondary battery 100 according to an embodiment comprises a positive electrode 10, an electrolyte layer 20, and a negative electrode 30. The electrolyte layer 20 contains a sulfide solid electrolyte and a perfluoropolyether represented by the following formula (1).

### 1.1 Positive Electrode

The positive electrode 10 may be any electrode which is capable of functioning properly as a positive electrode of a secondary battery, and the configuration thereof is not particularly limited. As shown in FIG. 1, the positive electrode 10 may comprise a positive electrode active material layer 11 and a positive electrode current collector 12.

### 1.1.1 Positive Electrode Active Material Layer

The positive electrode active material layer 11 contains at least a positive electrode active material, and may further contain an electrolyte, a conductive aid, a binder, etc. The positive electrode active material layer 11 may also contain various additives. For example, it may contain a dispersant or a perfluoropolyether, which will be described later. The content of each component of the positive electrode active material layer 11 may be appropriately determined in accordance with the desired battery performance. For example, when the entirety of the positive electrode active material layer 11 (total solid content) is 100 mass%, the content of the positive electrode active material may be 40 mass% or more, 50 mass% or more, 60 mass% or more, or 70 mass% or more, and 100 mass% or less, or 90 mass% or less. The shape of the positive electrode active material layer 11 is not particularly limited, and may be, for example, a sheet-like positive electrode active material layer having a substantially flat surface. The thickness of the positive electrode active material layer 11 is not particularly limited, and may be, for example, 0.1 µm or more, 1 µm or more, or 10 µm or more, and may be 2 mm or less, 1 mm or less, or 500 µm or less.

As the positive electrode active material, a material which is known as a positive electrode active material for secondary batteries may be used. Among known active materials, a material having a relatively noble potential (charge/discharge potential) for absorbing and releasing predetermined carrier ions (for example, lithium ions) can be used as the positive electrode active material, and a material having a relatively basic potential can be used as the negative electrode active material, which will be described later. The positive electrode active material may be at least one selected from, for example, various lithium-containing compounds, elemental sulfur, and sulfur compounds. The lithium-containing compound as the positive electrode active material may be any of various lithium-containing oxides such as lithium cobalt oxide, lithium nickel oxide, Li_{1±α}Ni_{1/3}Co_{1/3}Mn_{1/3}O_{2±δ}, lithium manganate, spinel-based lithium compounds (such as Li₁₊ₓMn_{2-x-y}M_{y}O₄ (where M is one or more selected from Al, Mg, Co, Fe, Ni, and Zn) substituted Li-Mn spinels), lithium titanate, and lithium metal phosphate (such as LiMPO₄, where M is one or more selected from Fe, Mn, Co, and Ni). In particular, when the positive electrode active material contains a lithium-containing oxide containing at least Li, at least one of Ni, Co, and Mn, and O as constituent elements, a greater effect can be expected. These positive electrode active materials may be used alone or in combination of two or more types thereof.

The shape of the positive electrode active material may be any shape which is common for the positive electrode active material of a battery. The positive electrode active material may be, for example, particulate. The positive electrode active material may be hollow, have voids, or be porous. The positive electrode active material may be primary particles or secondary particles formed by agglomeration of a plurality of primary particles. The average particle diameter D50 of the positive electrode active material may be, for example, 1 nm or more, 5 nm or more, or 10 nm or more, and may be 500 µm or less, 100 µm or less, 50 µm or less, or 30 µm or less. Note that as used herein, the average particle diameter D50 is the particle diameter (median diameter) at an integrated value of 50% in a volume-based particle size distribution obtained by a laser diffraction/scattering method.

A protective layer containing an ion-conductive oxide may be formed on the surface of the positive electrode active material. As a result, the reaction between the positive electrode active material and a sulfide (for example, a sulfide solid electrolyte, which will be described later) can more easily be suppressed. Examples of ion-conductive oxides include Li₃BO₃, LiBO₂, Li₂CO₃, LiAlO2, Li₄SiO4, Li₂SiO3, Li₃PO4, Li₂SO4, Li₂TiO3, Li₄Ti₅O₁₂, Li₂Ti₂O₅, Li₂ZrO₃, LiNbO3, Li₂MoO₄, and Li₂WO₄. The ion-conductive oxide may have some elements substituted with doping elements such as P and B. The coverage (area ratio) of the protective layer to the surface of the positive electrode active material may be, for example, 70% or more, 80% or more, or 90% or more. The thickness of the protective layer may be, for example, 0.1 nm or more or 1 nm or more, and may be 100 nm or less or 20 nm or less.

The electrolyte which can be contained in the positive electrode active material layer 11 may be a solid electrolyte, a liquid electrolyte (electrolytic solution), or a combination of these. In particular, when the positive electrode active material layer 11 contains at least a solid electrolyte as the electrolyte, a greater effect is likely to be obtained.

The solid electrolyte may be any solid electrolyte which is known for secondary batteries. The solid electrolyte may be an inorganic solid electrolyte or an organic polymer electrolyte. In particular, inorganic solid electrolytes have higher ion conductivity than organic polymer electrolytes. Furthermore, inorganic solid electrolytes have superior heat resistance as compared to organic polymer electrolytes. Examples of inorganic solid electrolytes include oxide solid electrolytes such as lithium lanthanum zirconate, LiPON, Li_{1+X}Al_{X}Ge_{2-X}(PO₄)₃, Li-SiO-based glasses, and Li-Al-S-O-based glasses; and sulfide solid electrolytes such as Li₂S-P₂S₅, Li₂S-SiS₂, LiI-Li₂S-SiS₂, LiI-Si₂S-P₂S₅, Li₂S-P₂S₅-LiI-LiBr, LiI-Li2_{S}-P₂S₅, LiI-Li₂S-P₂O₅, LiI-Li₃PO₄-P₂S₅, and Li₂S-P₂S₅-GeS. In particular, the performance of the sulfide solid electrolyte, particularly the sulfide solid electrolyte containing at least Li, S and P as constituent elements, is high. The solid electrolyte may be amorphous or crystalline. The solid electrolyte may be, for example, in the form of particles. One type of solid electrolyte may be used alone, or two or more types thereof may be used in combination.

The electrolytic solution may contain predetermined carrier ions (for example, lithium ions). The electrolytic solution may be, for example, a non-aqueous electrolytic solution. The composition of the electrolytic solution may be the same as the known composition of the electrolytic solution of the secondary battery. For example, the electrolytic solution may be a carbonate-based solvent in which a lithium salt is dissolved at a predetermined concentration. Examples of carbonate-based solvents include fluoroethylene carbonate (FEC), ethylene carbonate (EC), and dimethyl carbonate (DMC). Examples of lithium salts include LiPF₆.

Examples of the conductive aid which may be contained in the positive electrode active material layer 11 include carbon materials such as vapor-grown carbon fiber (VGCF), acetylene black (AB), Ketjen black (KB), carbon nanotubes (CNT), and carbon nanofibers (CNF); and metal materials such as nickel, aluminum, and stainless steel. The conductive aid may be, for example, particulate or fibrous, and the size thereof is not particularly limited. One type of conductive aid may be used alone, or two or more types thereof may be used in combination.

Examples of the binder that may be contained in the positive electrode active material layer 11 include butadiene rubber (BR)-based binders, butylene rubber (IIR)-based binders, acrylate butadiene rubber (ABR)-based binders, styrene butadiene rubber (SBR)-based binders, polyvinylidene fluoride (PVdF)-based binders, polytetrafluoroethylene (PTFE)-based binders, and polyimide (PI)-based binders. One type of binder may be used alone, or two or more types thereof may be used in combination.

### 1.1.2 Positive Electrode Current Collector

As shown in FIG. 1, the positive electrode 10 may comprise a positive electrode current collector 12 which contacts the positive electrode active material layer 11. The positive electrode current collector 12 may be any which is commonly used as the positive electrode current collector of a battery. The positive electrode current collector 12 may be in the form of a foil, a plate, a mesh, a punched metal, or a foam. The positive electrode current collector 12 may be composed of a metal foil or a metal mesh. In particular, metal foils are excellent in terms of ease of handling. The positive electrode current collector 12 may be composed of a plurality of foils. Examples of metals for constituting the positive electrode current collector 12 include Cu, Ni, Cr, Au, Pt, Ag, Al, Fe, Ti, Zn, Co, and stainless steel. In particular, the positive electrode current collector 12 may contain Al from the viewpoint of ensuring oxidation resistance. The positive electrode current collector 12 may have some type of coating layer on the surface thereof for the purpose of adjusting resistance. The positive electrode current collector 12 may be a metal foil or a substrate on which the metal described above is plated or vapor-deposited. When the positive electrode current collector 12 is composed of a plurality of metal foils, some layers may be present between the plurality of metal foils. The thickness of the positive electrode current collector 12 is not particularly limited. For example, it may be 0.1 µm or more or 1 µm or more, and 1 mm or less or 100 µm or less.

### 1.2 Electrolyte Layer

The electrolyte layer 20 is arranged between the positive electrode 10 and the negative electrode 30 and can function as a separator. The electrolyte layer 20 contains at least a sulfide solid electrolyte and a predetermined perfluoropolyether, and may further contain a binder or the like as desired. The electrolyte layer 20 may further contain other components such as a dispersant. The content of each component in the electrolyte layer 20 is not particularly limited, and may be appropriately determined in accordance with the desired battery performance. For example, the electrolyte layer 20 may contain 85 vol% or more, 90 vol% or more, or 95 vol% or more in total of the sulfide solid electrolyte, the predetermined perfluoropolyether, and the optional binder, with the remainder being voids or other components. The thickness of the electrolyte layer 20 is not particularly limited, and may be, for example, 0.1 µm or more or 1 µm or more, and may be 2 mm or less or 1 mm or less.

### 1.2.1 Sulfide Solid Electrolyte

The sulfide solid electrolyte contained in the electrolyte layer 20 may be appropriately selected from those exemplified as sulfide solid electrolytes which may be contained in the positive electrode active material layer 11 described above. Among them, a sulfide solid electrolyte containing at least Li, S, and P as constituent elements has high performance. The sulfide solid electrolyte may be amorphous or crystalline. The sulfide solid electrolyte may be, for example, in a particulate form. One type of sulfide solid electrolyte may be used alone, or two or more types thereof may be used in combination. The electrolyte layer 20 may contain other electrolytes in addition to the sulfide solid electrolyte.

### 1.2.2 Perfluoropolyether (PFPE)

The electrolyte layer 20 contains a perfluoropolyether (PFPE) represented by the following formula (1). According to the new findings of the present inventors, the sulfide solid electrolyte contained in the electrolyte layer has high chemical reactivity and may react with other materials, thereby changing or deteriorating. In this case, the ionic conductivity of the electrolyte layer is likely to decrease. For example, when an insulating material is contained in the electrolyte layer to enhance the insulation of the electrolyte layer, the sulfide solid electrolyte may react with the insulating material, thereby decreasing the ionic conductivity of the electrolyte layer. In contrast, the PFPE contained in the electrolyte layer 20 has high insulation and low reactivity with the sulfide solid electrolyte. Specifically, when a predetermined PFPE is contained in the electrolyte layer 20 together with the sulfide solid electrolyte, the voltage resistance of the electrolyte layer can be improved while suppressing deterioration of the sulfide solid electrolyte, and as a result, the electrolyte layer 20 is likely to have both voltage resistance and ionic conductivity.

Furthermore, according to the new findings of the present inventors, PFPE has a high affinity for the surfaces of various battery materials such as sulfide solid electrolytes because of the ether bond thereof, and it is believed that PFPE can be appropriately present in, for example, the gaps between the sulfide solid electrolyte materials, which can further increase the voltage resistance of the electrolyte layer.

The perfluoropolyether is represented by the following formula (1).

E₁-Rf₁-R^{F}-O-Rf₂-E₂ (1)

where Rf₁ and Rf₂ are each independently a C₁₋₁₆ divalent alkylene group which may be substituted with one or more fluorine atoms,
E₁ and E₂ are each independently a monovalent group selected from the group consisting of a fluorine group, a hydrogen group, a hydroxyl group, an aldehyde group, a carboxylic acid group, a C₁₋₁₀ alkyl ester group, an amide group which may have one or more substituents, and an amino group which may have one or more substituents, and
R^{F} is a divalent fluoropolyether group.

In the above formula (1), Rf₁ and Rf₂ each independently represent a C₁₋₁₆ divalent alkylene group optionally substituted with one or more fluorine atoms.

In one aspect, the "C₁₋₁₆ divalent alkylene group" in the above-mentioned C₁₋₁₆ divalent alkylene group optionally substituted by one or more fluorine atoms may be a straight chain or a branched chain, preferably a straight chain or branched chain C₁₋₆ alkylene group, particularly a C₁₋₃ alkylene group, more preferably a straight chain C₁₋₆ alkylene group, and particularly a C₁₋₃ alkylene group.

In an aspect, the "C₁₋₁₆ divalent alkylene" in the above-mentioned C₁₋₁₆ divalent alkylene group optionally substituted by one or more fluorine atoms may be linear or branched, and is preferably a linear or branched C₁₋₆ fluoroalkylene group, in particular a C₁₋₃ fluoroalkylene group, specifically, -CF₂CH₂- and -CF₂CF₂CH₂-, and more preferably a linear C₁₋₆ perfluoroalkylene group, in particular a C₁₋₃ perfluoroalkylene group, and specifically, a group selected from the group consisting of -CF₂-, -CF₂CF₂- and -CF₂CF₂CF₂ -.

In the above formula (1), E₁ and E₂ are each independently a monovalent group selected from the group consisting of a fluorine group, a hydrogen group, a hydroxyl group, an aldehyde group, a carboxylic acid group, a C₁₋₁₀ alkyl ester group, an amide group which may have one or more substituents, and an amino group which may have one or more substituents.

The PFPE has low reactivity with the sulfide solid electrolyte. Thus, even when the PFPE comes into contact with the sulfide solid electrolyte, ion conductivity is unlikely to decrease due to change or deterioration of the sulfide solid electrolyte. In particular, when the electrolyte layer contains a PFPE having a non-polar group as an end group, the reaction between the PFPE and the sulfide solid electrolyte is further suppressed, and even greater effects can be expected. In this regard, the E₁ and E₂ are each independently preferably a fluorine group. In an aspect, E₁-Rf₁ and E₂-Rf₂ may each independently be a group selected from the group consisting of -CF₃, - CF₂CF₃, and -CF₂CF₂CF₃.

In formula (1) described above, each R^{F} is independently a divalent fluoropolyether group.

each R^{F} is preferably a group represented by formula (2):

   -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}- (2)
each R^{Fa} is independently a hydrogen atom, a fluorine atom, or a chlorine atom,
a, b, c, d, e, and f are each independently an integer of 0 to 200,
the sum of a, b, c, d, e, and f is 1 or more,
the order of occurrence of each repeating unit enclosed in parentheses with the subscript a, b, c, d, e, or f is arbitrary in the formula, under the proviso that
when all R^{Fa} are hydrogen atoms or chlorine atoms, at least one of a, b, c, e, and f is 1 or more.

R^{Fa} is preferably a hydrogen atom or a fluorine atom, and more preferably a fluorine atom.

a, b, c, d, e and f may preferably each independently be an integer from 0 to 100.

The sum of a, b, c, d, e, and f is preferably 5 or more, more preferably 10 or more, and may be, for example, 15 or more or 20 or more. The sum of a, b, c, d, e, and f is preferably 200 or less, more preferably 100 or less, and further preferably 60 or less, and may be, for example, 50 or less or 30 or less.

These repeating units may be linear or branched. For example:
-(OC₆F₁₂)- may be any of -(OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, -(OCF₂CF₂CF₂CF(CF₃)CF₂)-, and -(OCF₂CF₂CF₂CF₂CF(CF₃))-.
-(OC₅F10)- may be any of -(OCF₂CF₂CF₂CF₂CF₂CF₂)-, -(OCF(CF₃)CF₂CF₂CF₂CF₂)-, - (OCF₂CF(CF₃)CF₂CF₂)-, -(OCF₂CF₂CF(CF₃)CF₂)-, and -(OCF₂CF₂CF₂CF(CF₃))-.
-(OC₄F₈)- may be any of -(OCF₂CF₂CF₂CF₂)-, -(OCF(CF₃)CF₂CF₂)-, - (OCF₂CF(CF₃)CF₂)-, -(OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F5))-.
-(OC₃F₆)- (i.e., the case in which R^{Fa} is a fluorine atom in formula (2) above) may be any of -(OCF₂CF₂CF₂)-, -(OCF(CF₃)CF₂)-, and -(OCF₂CF(CF₃))-.
-(OC₂F₄)- may be either -(OCF₂CF₂)- or -(OCF(CF₃))-.

In an aspect, each R^{F} may independently be a group represented by any one of the following formulas (2-1) to (2-5).

-(OC₃F₆)d-(OC₂F₄)ₑ- (2-1)

where d is an integer from 1 to 200, and e is 0 or 1.

   -(OC₄F₈)_{c}-(OC₃F₆)_{d}-(OC₂F₄)ₑ-(OCF₂)_{f}- (2-2)
where c and d are each independently an integer of 0 to 30,
e and f are each independently an integer of 1 or more and 200 or less,
the sum of c, d, e, and f is 2 or more, and
the order of occurrence of each repeating unit enclosed in parentheses with the subscript c, d, e or f is arbitrary in the formula.

   -(R₆-R₇)g- (2-3)
where R₆ is OCF₂ or OC₂F₄,
R₇ is a group selected from OC₂F₄, OC₃F₆, OC₄F₈, OC₅F₁₀, and OC₆F₁₂, or a combination of two or three groups selected from these groups, and
g is an integer of 2 to 100.

   -(OC₆F₁₂)ₐ-(OC₅F₁₀)b-(OC₄F₈)_{c}-(OC₃F₆)_{d}-(OC₂F₄)ₑ-(OCF₂)_{f}- (2-4)
where e is an integer of 1 or more and 200 or less,
a, b, c, d, and f are each independently an integer of 0 or more and 200 or less, and
the order of occurrence of each repeating unit enclosed in parentheses with the subscript a, b, c, d, e, or f is arbitrary in the formula.

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (2-5)
where f is an integer of 1 or more and 200 or less,
a, b, c, d, and e are each independently an integer of 0 or more and 200 or less, and
the order of occurrence of each repeating unit enclosed in parentheses with the subscript a, b, c, d, e, or f is arbitrary in the formula.

In formula (2-1) above, d is preferably an integer of 5 to 200, more preferably 10 to 100, further preferably 15 to 50, and is, for example, an integer of 25 to 35. Formula (2-1) above is preferably a group represented by -(OCF₂CF₂CF₂)_{d}- or -(OCF(CF₃)CF₂)_{d}-, and more preferably a group represented by -(OCF₂CF₂CF₂)d -. In an aspect, e is 0. In another aspect, e is 1.

In formula (2-2) above, e and f are each independently an integer of preferably 5 to 200, and more preferably 10 to 200. The sum of c, d, e, and f is preferably 5 or more, more preferably 10 or more, and may be, for example, 15 or more or 20 or more. In an aspect, formula (2-2) above is preferably a group represented by -(OCF₂CF₂CF₂CF₂)_{c}-(OCF₂CF₂CF₂)d-(OCF₂CF₂)ₑ-(OCF₂)_{f}-. In another aspect, formula (2-2) may be a group represented by -(OC₂F₄)ₑ-(OCF₂)_{f}-.

In formula (2-3) above, R⁶ is preferably OC₂F₄. In formula (2-3) above, R⁷ is preferably a group selected from OC₂F₄, OC₃F₆, and OC₄F₈, or a combination of two or three groups selected from these groups, and is more preferably a group selected from OC₃F₆ and OC₄F₈. The combination of two or three groups selected from OC₂F₄, OC3F₆ and OC4F₈ is not particularly limited, and examples thereof include -OC₂F₄OC₃F₆-, -OC₂F₄OC₄F₈-, - OC₃F₆OC₂F₄-, -OC₃F₆OC₃F₆-, -OC₃F₆OC₄F₈-, -OC₄F₈OC₄F₈-, -OC₄F₈OC₃F₆-, - OC₄F₈OC₂F₄-, -OC₂F₄OC₂F₄OC₃F₆-, -OC₂F₄OC₂F₄OC₄F₈-, -OC₂F₄OC₃F₆OC₂F₄-, - OC₂F₄OC₃F₆OC₃F₆-, -OC₂F₄OC₄F₈OC₂F₄-, -OC₃F₆OC₂F₄OC₂F₄-, -OC₃F₆OC₂F₄OC₃F₆-, - OC₃F₆OC₃F₆OC₂F₄-, and -OC₄F₈OC₂F₄OC₂F₄-. In formula (2-3) above, g is preferably an integer of 3 or more, and more preferably 5 or more. g is preferably an integer of 50 or less. In formula (2-3) above, OC₂F₄, OC₃F₆, OC₄F₈, OC₅F₁₀, and OC₆F₁₂ may be either linear or branched, and are preferably linear. In this aspect, formula (2-3) above is preferably -(OC₂F₄-OC3F₆)_{g}- or -(OC2F₄-OC4F₈)_{g}-.

In formula (2-4) above, e is preferably an integer of 1 or more and 100 or less, and more preferably an integer of 5 or more and 100 or less. The sum of a, b, c, d, e, and f is preferably 5 or more, more preferably 10 or more, for example, 10 or more and 100 or less.

In formula (2-5) above, f is preferably an integer of 1 or more and 100 or less, and more preferably an integer of 5 or more and 100 or less. The sum of a, b, c, d, e, and f is preferably 5 or more, more preferably 10 or more, for example, 10 or more and 100 or less.

In an aspect, each R^{F} is a group represented by formula (2-1).

In an aspect, each R^{F} is a group represented by formula (2-2).

In an aspect, each R^{F} is a group represented by formula (2-3).

In an aspect, each R^{F} is a group represented by formula (2-4).

In an aspect, each R^{F} is a group represented by formula (2-5).

In R^{F}, the ratio of e to f (hereinafter referred to as the "e/f ratio") may be 0.5 to 4, preferably 0.6 to 3, more preferably 0.7 to 2, and further preferably 0.8 to 1.4. By setting the e/f ratio to 4 or less, lubricity and chemical stability are further improved. The smaller the e/f ratio, the greater lubricity is improved. Conversely, by setting the e/f ratio to 0.5 or more, the stability of the compound can be further improved. The greater the e/f ratio, the more the stability of the fluoropolyether structure is improved. In this case, the value of f is preferably 0.8 or more.

In an aspect, each R^{F} may be a group represented by the following formula (2-6):

-(OCF₂CF₂CF₂)ₐ-(OCF(CF₃)CF₂)_{b}-(OCF₂CF(CF₃))_{c}-(OCF₂CF₂)_{d}-(OCF(CF₃))ₑ-(OCF₂)_{f}- (2-6)

where a, b, c, d, e, and f are each independently an integer of 0 to 200,
the sum of a, b, c, d, e, and f is 1 or more, and
the order of occurrence of each repeating unit enclosed in parentheses with the subscript a, b, c, d, e, or f is arbitrary in the formula.

In an embodiment, each R^{F} may be a group represented by the following formula (2-7):

-(OCF₂CF₂)_{d}-(OCF(CF₃))ₑ-(OCF₂)_{f}- (2-7)

where d, e, and f are each independently an integer of 0 to 200,
the sum of d, e, and f is 1 or more, and
the order of occurrence of each repeating unit enclosed in parentheses with the subscript d, e, or f is arbitrary in the formula.

In R^{F}, the ratio of d to f (hereinafter referred to as "d/f ratio") may be 0.5 to 4, preferably 0.6 to 3, more preferably 0.7 to 2, and further preferably 0.8 to 1.4. By setting the d/f ratio to 4 or less, lubricity and chemical stability are further improved. The smaller the d/f ratio, the greater lubricity is improved. Conversely, by setting the d/f ratio to 0.5 or more, the stability of the compound can be further improved. The greater the d/f ratio, the more the stability of the fluoropolyether structure is improved. In this case, the value of f is preferably 0.8 or more.

In the fluoropolyether group-containing compound described above, the number average molecular weight of each R^{F} portion is not particularly limited, and is, for example, 500 to 30,000, preferably 1,500 to 30,000, and more preferably 2,000 to 10,000. In the present description, the number average molecular weight of RF is a value measured by ¹⁹F-NMR.

The content of the PFPE in the electrolyte layer 20 is not particularly limited and can be appropriately selected in accordance with the desired voltage resistance and ion conductivity. In particular, when the electrolyte layer 20 contains the PFPE described above in an amount of 1 vol% or more and 25 vol% or less, a greater effect is likely to be obtained. The electrolyte layer 20 may contain the PFPE described above in an amount of, for example, 1 vol% or more, 3 vol% or more, 5 vol% or more, 7 vol% or more, or 8 vol% or more and 25 vol% or less, 24 vol% or less, 22 vol% or less, 20 vol% or less, 18 vol% or less, 16 vol% or less, 14 vol% or less, or 12 vol% or less.

The volume ratio of the PFPE in the electrolyte layer 20 is measured as follows. Specifically, the volume of the electrolyte layer 20 is measured in advance using an optical microscope or SEM. The content volume of the PFPE may be identified by washing the electrolyte layer 20 with a solvent (a solvent capable of dissolving the PFPE without dissolving other electrode materials), recovering the filtrate in which the PFPE is dissolved by suction filtration or the like, and analyzing the recovered solvent by GC-MS. In the case where the solvent has a boiling point significantly different from that of the PFPE, the PFPE may be extracted by distillation and the volume of the PFPE may be directly measured. In this manner, the volume ratio of the PFPE to the volume of the electrolyte layer 20 measured in advance is calculated.

### 1.2.3 Binder

The binder which can be contained in the electrolyte layer 20 may be appropriately selected from, for example, those exemplified as binders which can be contained in the positive electrode active material layer 11 described above.

### 1.3 Negative Electrode

The negative electrode 30 may be any electrode which capable of functioning properly as a negative electrode of the secondary battery, and the configuration thereof is not particularly limited. As shown in FIG. 1, the negative electrode 30 may contain a negative electrode active material layer 31 and a negative electrode current collector 32.

### 1.3.1 Negative Electrode Active Material Layer

The negative electrode active material layer 31 contains at least a negative electrode active material, and may further contain an electrolyte, a conductive aid, a binder, etc. The negative electrode active material layer 31 may also contain various additives. For example, it may contain a dispersant or the perfluoropolyether described above. The content of each component in the negative electrode active material layer 31 may be appropriately determined in accordance with the desired battery performance. For example, when the entire negative electrode active material layer 31 (total solid content) is 100 mass%, the content of the negative electrode active material may be 40 mass% or more, 50 mass% or more, 60 mass% or more, or 70 mass% or more, and 100 mass% or less, or 90 mass% or less. The shape of the negative electrode active material layer 31 is not particularly limited, and may be, for example, a sheet-like negative electrode active material layer having a substantially flat surface. The thickness of the negative electrode active material layer 31 is not particularly limited, and may be, for example, 0.1 µm or more, 1 µm or more, or 10 µm or more, and may be 2 mm or less, 1 mm or less, or 500 µm or less.

As the negative electrode active material, various substances which have a potential (charge/discharge potential) for absorbing and releasing predetermined carrier ions (for example, lithium ions) that is lower than that of the positive electrode active material can be adopted. For example, the negative electrode active material may be at least one selected from silicon-based active materials such as Si, Si alloys, and silicon oxide; carbon-based active materials such as graphite and hard carbon; various oxide-based active materials such as lithium titanate; metallic lithium, lithium alloys, and the like. One type of negative electrode active material may be used alone, or two or more types thereof may be used in combination.

The shape of the negative electrode active material may be a shape which is generally used in the negative electrode active material for a battery. The negative electrode active material may be, for example, particulate. The negative electrode active material may be hollow, may have voids, or may be porous. The negative electrode active material may be primary particles, or may be secondary particles formed by agglomeration of a plurality of primary particles. The average particle diameter D50 of the negative electrode active material may be, for example, 1 nm or more, 5 nm or more, or 10 nm or more, and may be 500 µm or less, 100 µm or less, 50 µm or less, or 30 µm or less. Alternatively, the negative electrode active material may be in the form of a sheet (foil or film) such as a lithium foil. Specifically, the negative electrode active material layer 31 may be composed of a sheet of the negative electrode active material.

The electrolyte which may be contained in the negative electrode active material layer 31 may be a solid electrolyte, a liquid electrolyte (electrolytic solution), or a combination of these. In particular, when the negative electrode active material layer 31 contains at least a solid electrolyte as an electrolyte, a greater effect is likely to be obtained. The negative electrode active material layer 31 may contain a solid electrolyte, particularly a sulfide solid electrolyte, and further, among them, a sulfide solid electrolyte containing Li₂S-P₂S₅. Examples of the conductive aid which may be contained in the negative electrode active material layer 31 include the carbon materials described above and the metal materials described above. The binder which may be contained in the negative electrode active material layer 31 may be appropriately selected from, for example, those exemplified as binders which may be contained in the positive electrode active material layer 11 described above.

### 1.3.2 Negative Electrode Current Collector

As shown in FIG. 1, the negative electrode 30 may contain a negative electrode current collector 32 which is in contact with the negative electrode active material layer 31. The negative electrode current collector 32 may be any which is commonly used as the negative electrode current collector for a battery. The negative electrode current collector 32 may be in the form of a foil, a plate, a mesh, a punched metal, or a foam. The negative electrode current collector 32 may be a metal foil or a metal mesh, or may be a carbon sheet. In particular, metal foils are excellent in terms of ease of handling. The negative electrode current collector 32 may be composed of a plurality of foils or sheets. Examples of metals constituting the negative electrode current collector 32 include Cu, Ni, Cr, Au, Pt, Ag, Al, Fe, Ti, Zn, Co, and stainless steel. In particular, from the viewpoint of ensuring reduction resistance and preventing alloying with lithium, the negative electrode current collector 32 may contain at least one metal selected from Cu, Ni, and stainless steel. The negative electrode current collector 32 may have some type of coating layer on the surface thereof for the purpose of adjusting resistance. Furthermore, the negative electrode current collector 32 may be a metal foil or a substrate on which the metal described above is plated or vapor-deposited. When the negative electrode current collector 32 is composed of a plurality of metal foils, some sort of layer may be present between the plurality of metal foils. The thickness of the negative electrode current collector 32 is not particularly limited. For example, it may be 0.1 µm or more or 1 µm or more, and may be 1 mm or less or 100 µm or less.

### 1.4 Other Configurations

In the secondary battery 100, each of the components described above may be housed inside an exterior body. Any known exterior body for a battery can be used as the exterior body. Furthermore, a plurality of secondary batteries 100 may be electrically connected in any manner and stacked in any manner to form a battery pack. In this case, the battery pack may be housed inside a known battery case. The secondary battery 100 may also comprise other obvious components such as necessary terminals. Examples of the shape of the secondary battery 100 include a coin type, a laminate type, a cylindrical type, and a rectangular type.

### 2. Secondary Battery Production Method

The secondary battery 100 can be produced by adopting a known method. For example, it can be produced as follows. However, the production method for the secondary battery 100 is not limited to the following method, and each layer may be formed by, for example, dry molding or the like.
(1) The negative electrode active material constituting the negative electrode active material layer is dispersed in a solvent to obtain a negative electrode slurry. The solvent used in this case is not particularly limited, and may be water or any of various organic solvents, or may be N-methylpyrrolidone (NMP). Thereafter, the negative electrode slurry is applied to the surface of a negative electrode current collector or an electrolyte layer as described below using a doctor blade or the like, and then dried to form a negative electrode active material layer on the surface of the negative electrode current collector or the electrolyte layer, thereby forming a negative electrode. The negative electrode active material layer may be press-molded.
(2) The positive electrode active material constituting the positive electrode active material layer is dispersed in a solvent to obtain a positive electrode slurry. The solvent used in this case is not particularly limited, and water or any of various organic solvents can be used, and N-methylpyrrolidone (NMP) may also be used. Thereafter, the positive electrode slurry is applied to the surface of a positive electrode current collector or an electrolyte layer as described below using a doctor blade or the like, and then dried to form a positive electrode active material layer on the surface of the positive electrode current collector or the electrolyte layer, thereby forming a positive electrode. The positive electrode active material layer may be press molded.
(3) Each layer is laminated so that the electrolyte layer is interposed between the negative electrode and the positive electrode to obtain a laminate having a negative electrode current collector, a negative electrode active material layer, an electrolyte layer, a positive electrode active material layer, and a positive electrode current collector in this order. The electrolyte layer may be obtained by molding an electrolyte mixture containing, for example, a sulfide solid electrolyte, the PFPE, and a binder, or may be obtained by press-molding. The laminate may be further press molded. Other members such as terminals are attached to the laminate as needed.
(4) The laminate is placed in a battery case and sealed to obtain a secondary battery.

### 3. Supplementary Information

The technology of the present disclosure can be applied not only to lithium-ion secondary batteries, but also to secondary batteries other than lithium-ion secondary batteries (for example, sodium-ion secondary batteries). However, when the technology of the present disclosure is applied to lithium-ion secondary batteries, it is likely to exhibit even greater effects.

### EXAMPLES

The technology of the present disclosure will be described in more detail below with reference to Examples, but the technology of the present disclosure is not limited to the following Examples.

### 1. Preparation of Electrolyte Layer (Separator Layer)

A sulfide solid electrolyte (LiI-LiBr-Li₂S-P₂S₅), a binder (PVdF), and an additive component (styrene butadiene rubber (SBR), polyethylene oxide (PEO), or PFPE) were added to an organic solvent, and were kneaded using an ultrasonic homogenizer to obtain an electrolyte slurry. The obtained electrolyte slurry was applied onto an Al foil and dried to form an electrolyte layer on the Al foil. The volume ratios (vol%) of the sulfide solid electrolyte, binder, and additive components contained in the electrolyte layer are as shown in Table 1 below. The PFPE was a liquid having a chemical structure represented by the following formula (I) (where m/n is 1.2, the number average molecular weight is 5120, and the terminal R has CF₃ and CF₂CF₃ in an average ratio of 1:0.17).

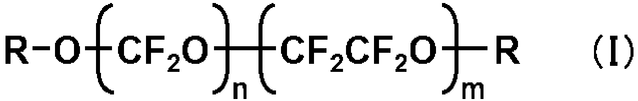

### 2. Measurement of Electrolyte Layer Thickness

The obtained electrolyte layer was punched together with the Al foil to obtain a measurement sample having a diameter of 11.28 mm. The thickness of the obtained measurement sample was measured using a micrometer. The thickness of the electrolyte layer was determined by subtracting the thickness of the Al foil from the measured thickness.

### 3. Voltage Resistance Evaluation

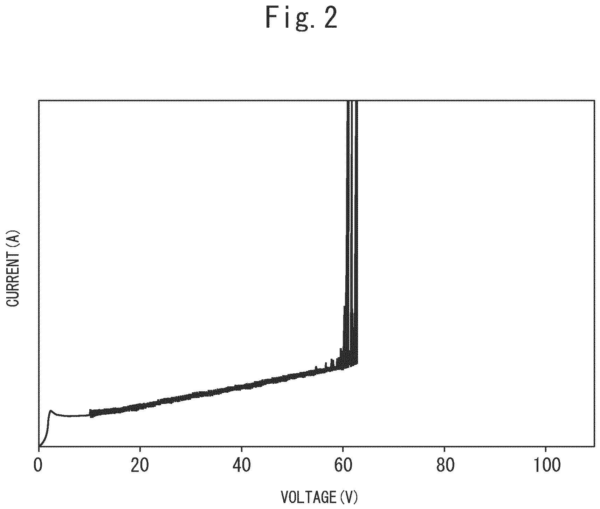

The Al foil was removed from the measurement sample punched out to a diameter of φ11.28 mm described above to obtain an electrolyte layer, which was then interposed between SUS electrodes. In this state, the voltage was swept from 0 V to 110 V. At this time, the voltage at which the current rose and short-circuited, as shown in FIG. 2, was measured as the "voltage resistance (V)."

### 4. Evaluation of Ionic Conductivity

Two of the measurement sample punched out to φ11.28 mm described above were prepared, the electrolyte layers thereof were bonded together, and the two Al foils were removed. The samples were then interposed between carbon-coated Al foils, and electricity was collected from both sides with SUS electrodes. The resistance was then measured by the AC impedance method. The resistance value at the real axis intercept at 300 kHz was read from the obtained Nyquist plot, and the ionic conductivity was calculated from this and the thickness of the electrolyte layer.

### 5. Evaluation Results

The evaluation results are shown in Table 1 below. In Table 1, the evaluation results of ionic conductivity are shown relative to the ionic conductivity of Comparative Example 1, which is set as 100.

**[Table 1]**

| | Solid electrolyte | | Binder | | Additive | | Voids | Thickness | Voltage resistance | Ionic conductivity |
|---|---|---|---|---|---|---|---|---|---|---|
| | Type | Volume ratio (vol%) | Type | Volume ratio (vol%) | Type | Volume ratio (vol%) | Volume ratio (vol%) | (µm) | (V) | |
| Comp Ex 1 | Sulfide | 87 | PVdF | 1 | - | 0 | 12 | 50 | 61.2 | 100.0 |
| Comp Ex 2 | Sulfide | 87 | PVdF | 13 | - | 0 | 0 | 50 | 64.3 | 55.1 |
| Comp Ex 3 | Sulfide | 80 | PVdF | 20 | - | 0 | 0 | 50 | 68.6 | 37.1 |
| Comp Ex 4 | Sulfide | 87 | PVdF | 1 | SBR | 12 | 0 | 50 | 67.7 | 48.9 |
| Comp Ex 5 | Sulfide | 87 | PVdF | 1 | PEO | 8 | 4 | 50 | 31.7 | 36.0 |
| Ex 1 | Sulfide | 74 | PVdF | 1 | PFPE | 25 | 0 | 50 | 69.6 | 97.5 |
| Ex 2 | Sulfide | 87 | PVdF | 1 | PFPE | 12 | 0 | 50 | 73.2 | 99.3 |
| Ex 3 | Sulfide | 87 | PVdF | 1 | PFPE | 8 | 4 | 50 | 66.6 | 100.1 |
| Ex 4 | Sulfide | 87 | PVdF | 1 | PFPE | 3 | 9 | 50 | 63.3 | 100.0 |
| Ex 5 | Sulfide | 87 | PVdF | 1 | PFPE | 1 | 11 | 50 | 61.4 | 99.5 |

The results shown in Table 1 indicate the following:
(1) In Comparative Example 1, the electrolyte layer did not contain any additive component, and sufficient voltage resistance was not obtained.
(2) In Comparative Examples 2 to 4, the electrolyte layer contained a large amount of PVdF or SBR, and thus, the voltage resistance of the electrolyte layer was improved, but the ionic conductivity of the electrolyte layer was reduced. Both PVdF and SBR function as binders, but it is difficult to achieve both voltage resistance and ionic conductivity even if the amount of binder in the electrolyte layer is increased.
(3) In Comparative Example 5, the electrolyte layer contained PEO as an additive component, and as a result, the voltage resistance of the electrolyte layer was significantly reduced, and the ion conductivity was also reduced.
(4) In contrast, in Examples 1 to 5, the electrolyte layer contained the PFPE as an additive component, which improved the voltage resistance of the electrolyte layer and maintained sufficient ionic conductivity. It is believed that the PFPE had excellent insulating properties and low reactivity with the sulfide solid electrolyte. A secondary battery comprising an electrolyte layer having high voltage resistance and ionic conductivity in the manner of Examples 1 to 5 is likely to have low resistance and is likely to have improved battery performance.

Though a PFPE having a specific chemical structure is exemplified in the Examples described above, the chemical structure of the PFPE is not limited thereto. Furthermore, though a sulfide solid electrolyte having a specific chemical composition is exemplified in the Examples described above, the chemical composition of the sulfide solid electrolyte is not limited thereto. Furthermore, though PVdF is exemplified as the binder in the Examples described above, the binder which can be contained in the electrolyte layer is not limited to PVdF, and any of various other binders may be used, or no binder may be used.

As described above, it is believed that a secondary battery having the following features is likely to achieve both voltage resistance and ionic conductivity in the electrolyte layer and can exhibit excellent performance:
(1) comprising a positive electrode, an electrolyte layer, and a negative electrode; and
(2) the electrolyte layer contains a sulfide solid electrolyte and a specific perfluoropolyether.

### DESCRIPTION OF REFERENCE SIGNS

- 10: positive electrode
- 11: positive electrode active material layer
- 12: positive electrode current collector
- 20: electrolyte layer
- 30: negative electrode
- 31: negative electrode active material layer
- 32: negative electrode current collector
- 100: secondary battery

## Claims

1. A secondary battery, comprising a positive electrode, an electrolyte layer, and a negative electrode, wherein
the electrolyte layer contains a sulfide solid electrolyte and a perfluoropolyether represented by formula (1) below:
E₁-Rf₁-R^{F}-O-Rf₂-E₂ (1)
where Rf₁ and Rf₂ are each independently a C₁₋₁₆ divalent alkylene group which may be substituted with one or more fluorine atoms,
E₁ and E₂ are each independently a monovalent group selected from the group consisting of a fluorine group, a hydrogen group, a hydroxyl group, an aldehyde group, a carboxylic acid group, a C₁₋₁₀ alkyl ester group, an amide group which may have one or more substituents, and an amino group which may have one or more substituents, and
R^{F} is a divalent fluoropolyether group.

2. The secondary battery according to claim 1, wherein
R^{F} is a group represented by formula (2):
-(OC₆F₁₂)ₐ-(OC₅F₁₀₎b₋(OC₄F₈)_{c}-(OC₃R^{Fa}₆)_{d}-(OC₂F₄)ₑ-(OCF₂)_{f}- (2)
where each R^{Fa} is independently a hydrogen atom, a fluorine atom, or a chlorine atom,
a, b, c, d, e, and f are each independently an integer of 0 to 200,
the sum of a, b, c, d, e, and f is 1 or more,
the order of occurrence of each repeating unit enclosed in parentheses with the subscript a, b, c, d, e, or f is arbitrary in the formula, and
under the proviso that when all R^{Fa} are hydrogen atoms or chlorine atoms, at least one of a, b, c, e, and f is 1 or more.

3. The secondary battery according to claim 2, wherein
each R^{Fa} is a fluorine atom.

4. The secondary battery according to claim 3, wherein
each R^{F} is independently a group represented by formula (2-1), (2-2), (2-3), (2-4), or (2-5) below:
-(OC₃F₆)_{d}-(OC₂F₄)ₑ- (2-1)
where d is an integer of 1 to 200, and e is 0 or 1;
-(OC₄F₈)_{c}-(OC₃F₆)_{d}-(OC₂F₄)ₑ-(OCF₂)_{f}- (2-2)
where c and d are each independently an integer of 0 to 30,
e and f are each independently an integer of 1 to 200,
the sum of c, d, e, and f is an integer of 10 to 200, and
the order of occurrence of each repeating unit enclosed in parentheses with the subscript c, d, e or f is arbitrary in the formula;
-(R₆-R₇)_{g}- (2-3)
where R₆ is OCF₂ or OC₂F₄,
R₇ is a group selected from OC₂F₄, OC₃F₆, OC₄F₈, OC₅F₁₀, and OC₆F₁₂, or a combination of two or three groups selected from these groups, and
g is an integer of 2 to 100;
-(OC₆F₁₂)ₐ-(OC₅F₁₀)b-(OC₄F₈)_{c}-(OC₃F₆)d-(OC₂F₄)ₑ-(OCF₂)_{f}- (2-4)
where e is an integer of 1 or more and 200 or less,
a, b, c, d, and f are each independently an integer of 0 or more and 200 or less, and
the order of occurrence of each repeating unit enclosed in parentheses with the subscript a, b, c, d, e, or f is arbitrary in the formula; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (2-5)
where f is an integer of 1 or more and 200 or less,
a, b, c, d, and e are each independently an integer of 0 or more and 200 or less, and
the order of occurrence of each repeating unit enclosed in parentheses with the subscript a, b, c, d, e, or f is arbitrary in the formula.

5. The secondary battery according to claim 4, wherein
each R^{F} is a group represented by formula (2-6) below:
-(OCF₂CF₂CF₂)ₐ-(OCF(CF₃)CF₂)_{b}-(OCF₂CF(CF₃))_{c}-(OCF₂CF₂)_{d}-(OCF(CF₃))ₑ-(OCF₂)_{f}- (2-6)
where a, b, c, d, e, and f are each independently an integer of 0 to 200,
the sum of a, b, c, d, e, and f is 1 or more, and
the order of occurrence of each repeating unit enclosed in parentheses with the subscript a, b, c, d, e, or f is arbitrary in the formula.

6. The secondary battery according to claim 4, wherein
each R^{F} is a group represented by formula (2-7) below:
-(OCF₂CF₂)_{d}-(OCF(CF₃))ₑ-(OCF₂)_{f}- (2-7)
where d, e, and f are each independently an integer of 0 to 200,
the sum of d, e, and f is 1 or more, and
the order of occurrence of each repeating unit enclosed in parentheses with the subscript d, e, or f is arbitrary in the formula.

7. The secondary battery according to any one of claims 1 to 6, wherein
E₁-Rf₁ and E₂-Rf₂ are each independently a group selected from the group consisting of - CF₃, -CF₂CF₃, and -CF₂CF₂CF₃.

8. The secondary battery according to any one of claims 1 to 7, wherein
the electrolyte layer contains 1 vol% or more and 25 vol% or less of the perfluoropolyether.
